# EUROPEAN PATENT APPLICATION

(11) **EP 0 933 773 A1**
(43) Date of publication of application: **04.08.1999**
(21) Application number: 99300514.9
(22) Date of filing: 25.01.1999
(51) Int. Cl.: G11B 23/087

(54) **Tape cassette**

(30) Priority: 30.01.1998 JP 3228898
(71) Applicant: TDK Corporation, Chuo-ku, Tokyo (JP)
(72) Inventor: Shima, Motohiko, Saku-shi, Nagano (JP); Ikebe, Masaru, Saku-shi, Nagano (JP)
(74) Representative: Geering, Keith Edwin

(57) **Abstract**

A tape cassette capable of eliminating damage to a tape due to inward deformation of an upper lid (5) and a front lid (3) of a lid structure of the tape cassette and ensuring smooth pivotal movement of the lid structure and safe handling of the tape cassette. An upper casing member (1) is formed with a front opening (11) and provided with a front-side edge (12) in a manner to be positioned at the opening (11). The upper lid (5) is provided at a rear end (50) thereof with a rear surface portion (51), which is adapted to be abutted against the front-side edge (12) of the upper casing member (1). Further, the front-side edge (12) of the upper casing member (1) and the rear surface portion (51) of the upper lid (5) are provided thereon with a recessed groove (13) and a projection (52) in a manner to be opposite to each other and thus engageable with each other, respectively. Such construction prevents the rear end (50) of the upper lid (5) from getting under the front-side edge (12) of the upper casing member (1) during handling of the tape cassette or when a strong shock due to, for example, the tape cassette being dropped or the like, is applied to the lid structure.

## Description

### BACKGROUND OF THE INVENTION

This invention relates to a tape cassette suitable for use for a magnetic recording/reproducing apparatus such as a video tape recorder (VTR) or the like, and more particularly to a tape cassette such as an 8 mm video cassette, a digital video cassette (DVC) or the like which has a tape-like medium (hereinafter referred to as "tape") received in a casing while being wound on tape reels and includes a lid structure for covering a front surface of the tape, a rear surface thereof and an upper end thereof during non-use of the tape cassette.

A conventional tape cassette which has been known in the art is typically constructed in such a manner that a tape wound on a pair of rotatable tape reels is received in a casing so as to stretchedly extend therebetween along a front side of the casing. When the tape cassette includes a lid structure consisting of a front lid and a rear lid for protecting a potion of the tape positioned on the front side of the casing during non-use of the tape cassette, the casing and lid structure are provided with abutments at overlap portions thereof at which a rear surface of the front lid of the lid structure and an upper surface of a casing body of the casing overlap each other, to thereby restrain or prevent positional misregistration of the front lid with respect to the casing body in a horizontal direction, as disclosed in Japanese Patent Application Laid-Open Publication No. 182828/1995. Thus, when external force is downwardly applied to the front lid, the abutments are abutted against each other to prevent the front lid from being inwardly deformed.

Japanese Patent Application Laid-Open Publication No. 195061/1997 discloses another tape cassette including a lid structure consisting of a front lid, a rear lid and an upper lid, which cassette is so constructed that the upper lid of the lid structure is provided on a rear surface of a front end thereof with a projection adapted to be abutted against an upper end of the front lid of the lid structure and the front lid is provided at the upper end thereof with a support plate which rearwardly extends therefrom. In such construction, when external force is rearwardly applied to the front lid, the projection of the upper lid is abutted against the upper end of the front lid, and when external force is downwardly applied to the upper lid, the support plate arranged at the upper end of the front lid is abutted against the front end of the upper lid, to thereby keep the upper and front lids from being inwardly deformed.

However, such conventional tape cassettes each fail to fully prevent inward deformation of the upper and front lids, so that the tape is caused to be brought into contact with or caught by the upper or front lid inwardly deformed, resulting in damage to the tape such as bending thereof, scratching thereof, cutting thereof or the like. Also, application of increased external force or shock to the tape cassette, in particular, application of a strong shock thereto due to, for example, the tape cassette being dropped or the like, causes a failure in satisfactory pivotal movement of the lid structure.

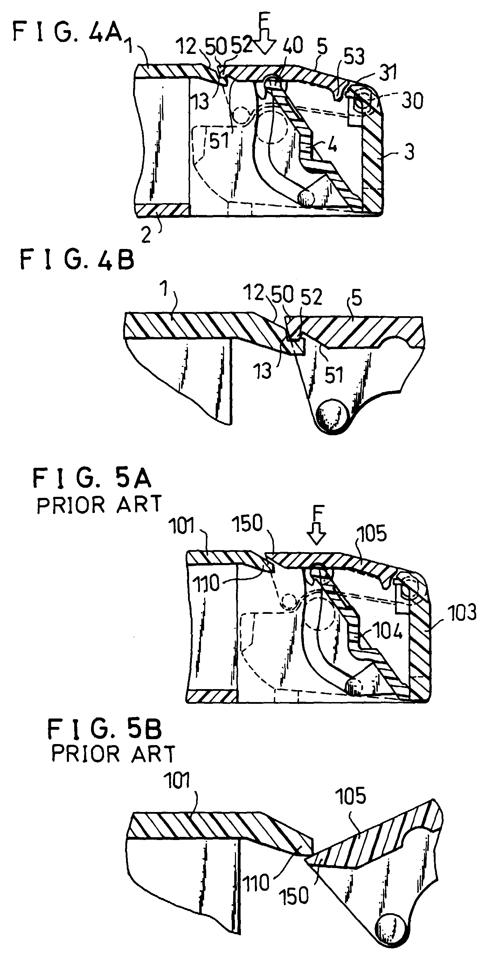

Now, such a failure will be described with reference to Figs. 5A and 5B. In a conventional lid structure including a front lid 103, a rear lid 104 and an upper lid 105, application of external force F to the upper lid 105 causes a rear end 150 of the upper lid 105 to get under a lower edge 110 of a front end of an upper casing member 101 of a casing, to thereby keep the lid structure from carrying out satisfactory pivotal movement. Also, application of external force at an increased level to the lid structure causes the upper lid 105 and front lid 103 to bite each other because they fail to exhibit sufficient rigidness, to thereby deteriorate opening and closing operations of the lid structure. Thus, such a conventional lid structure exhibits insufficient reliability in handling of the tape cassette or against application of shock thereto.

### SUMMARY OF THE INVENTION

The present invention provides a tape cassette which is more resistant to damage to a tape due to inward deformation of an upper lid and a front lid of a lid structure; there may be less risk of a rear end of an upper lid of a lid structure getting under a front-side edge of an upper casing member of a casing during handling of the tape cassette or when a strong shock is applied to the lid structure, so that smooth pivotal movement of the latter is preserved.

Preferred tape cassettes of the present invention are safe to handle and operate, are reliable in operation and handling, and can be assembled easily and manufactured efficiently.

In accordance with the present invention, a tape cassette is provided which includes a casing formed by joining an upper casing member to a lower casing member so that a pair of tape reels is rotatably receivable in the casing with a tape wound on the tape reels and arranged so as to reversibly travel from one of the tape reels along a front side of the casing to the other of the tape reels while stretchedly extending between the tape reels, and a lid structure including a front lid for selectively covering a front surface of a portion of such tape positioned on the front side of the casing, an upper lid for selectively covering an upper end of the portion of such tape and a rear lid for selectively covering a rear surface of the portion of such tape which are operated in association with each other so as to be opened and closed.

The upper casing member is formed with a front opening and provided with a front-side edge in a manner to be positioned at the opening. The upper lid is provided at a rear end thereof with a rear surface portion, which is adapted to be abutted against the front-side edge of the upper casing member. One of the front-side edge of the upper casing member and the rear surface portion of the upper lid is provided with a recessed groove and the other thereof is provided with a projection in a manner to be opposite to each other along the opening of the upper casing member and thus engageable with each other, respectively.

In the tape cassette, when external force is downwardly applied to the upper lid or front lid of the lid structure, the upper lid is firmly engaged with the front-side edge of the upper casing member of the casing through means of the recessed groove and projection which are each provided on a respective one of the front-side edge of the upper casing member and the rear surface portion of the upper lid, to thereby prevent inward deformation of the lid structure, resulting in eliminating damage to the tape. Further, such construction prevents the rear end of the upper lid from getting under the front-side edge of the upper casing member during handling of the tape cassette or when a strong shock due to, for example, the tape cassette being dropped or the like, is applied to the lid structure, to thereby ensure smooth pivotal movement of the lid structure and safe handling of the tape cassette.

In a preferred embodiment of the present invention, the recessed groove is disposed on the front-side edge of the upper casing member and the projection is disposed on the rear surface portion of the upper lid.

In a preferred embodiment of the present invention, the recessed groove and the projection are each formed to have a length substantially equal to a width of the opening of the upper casing member.

In a preferred embodiment of the present invention, the front-side edge of the upper casing member and the rear surface portion of the upper lid are formed with respective inclined surfaces adapted to be joined to each other when the lid structure is in a closed state. Each of the recessed groove and the projection is disposed on a corresponding one of the inclined surfaces so as to extend in parallel to the front-side edge of the upper casing member.

In a preferred embodiment of the present invention, the upper lid is provided on a front side thereof with a second projection and the front lid is provided with a third projection in a manner to be opposite to the second projection of the upper lid.

### BRIEF DESCRIPTION OF THE DRAWINGS

The present invention and many of its attendant advantages will be readily appreciated as the same becomes better understood by reference to the following detailed description when considered in connection with the accompanying drawings; wherein:
Fig. 1 is an exploded perspective view showing an embodiment of a tape cassette according to the present invention;
Fig. 2 is an enlarged perspective view showing an upper casing member of a casing of the tape cassette of Fig. 1;
Fig. 3 is an enlarged perspective view showing an upper lid of a lid structure incorporated in the tape cassette of Fig. 1, which is viewed from below;
Fig. 4A is a fragmentary enlarged vertical sectional view showing the lid structure mounted on the upper casing member of the casing in the tape cassette of Fig. 1;
Fig. 4B is a partially enlarged sectional view of Fig. 4A;
Fig. 5A is a fragmentary enlarged vertical sectional view showing a lid structure mounted on an upper casing member of a casing in a conventional tape cassette; and
Fig. 5B is a partially enlarged sectional view of Fig. 5A.

### DETAILED DESCRIPTION OF THE PREFERRED EMBODIMENT

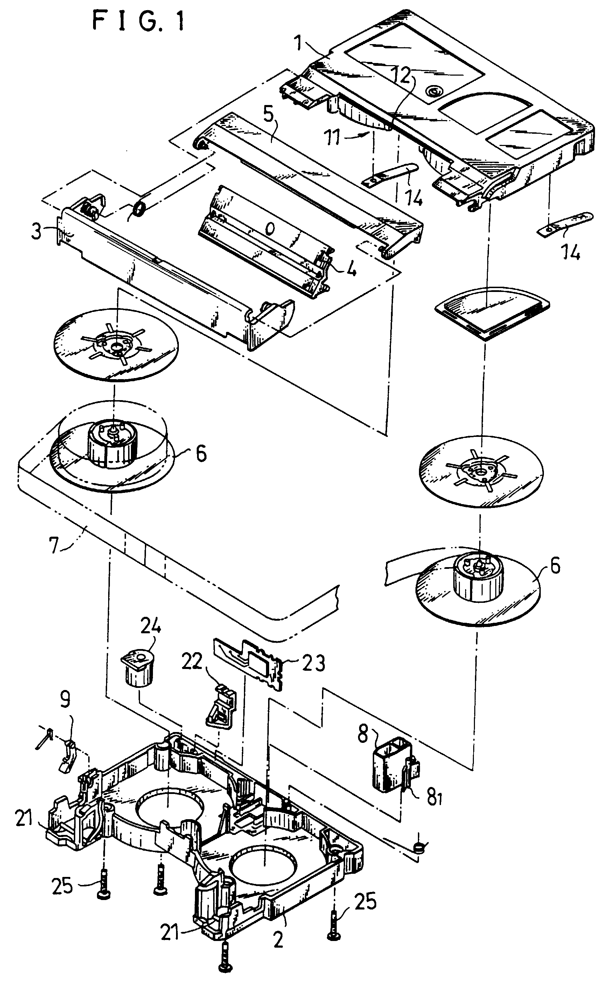

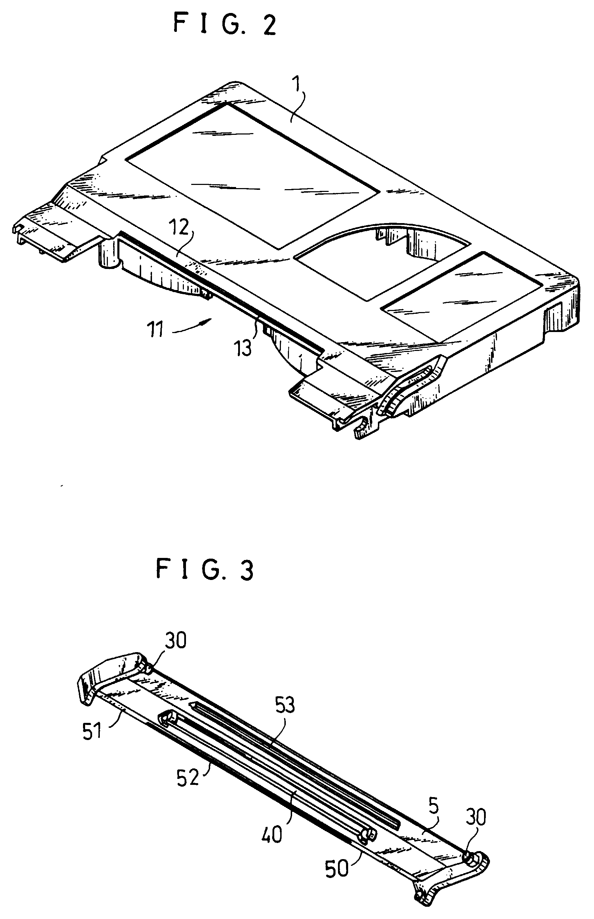

Now, a tape cassette according to the present invention will be described hereinafter with reference to Figs. 1 to 4B.

Referring first to Figs. 1 to 3, an embodiment of a tape cassette according to the present invention is illustrated. A tape cassette of the illustrated embodiment includes a casing constituted of an upper casing member 1 and a lower casing member 2 joined to each other. The casing is provided therein with a pair of tape reels 6 in a manner to be rotatable. The tape reels 6 have a tape 7 wound thereon so as to stretchedly extend therebetween. The lower casing member 2 of the casing is formed on opposite sides of a front end thereof with a pair of openings 21. Thus, the tape 7 is arranged so as to reversibly travel from one of the tape reels 6 through a corresponding one of the openings 21 to an exterior of a front side of the casing and then through the other opening 21 to the other tape reel 6 while being stretched between both tape reels 6.

The tape cassette also includes a lid structure for covering a portion of the tape 7 exposed from the casing during non-use of the tape cassette. The lid structure includes a front lid 3 for selectively covering a front surface of the exposed portion of the tape 7 positioned in an opening of the casing on the front side of the casing, an upper lid 5 for selectively covering an upper end of the exposed portion of the tape 7 and a rear lid 4 for selectively covering a rear surface of the exposed portion of the tape 7. The lid structure is mounted on the upper casing member 1 through a lid interlock mechanism so as to be opened and closed. The upper casing member 1 is formed with a front opening 11 and provided with a front-side edge 12 in a manner to be positioned at the opening 11. The upper lid 5 is provided at a rear end 50 thereof with a rear surface portion 51, which is adapted to be abutted against the front-side edge 12 of the upper casing member 1. The front-side edge 12 of the upper casing member 1 and the rear surface portion 51 of the rear end 50 of the upper lid 5 are provided thereon with a recessed groove 13 and a projection 52, respectively, in a manner to be opposite to each other so that the recessed groove 13 and projection 52 are adapted to be selectively fittedly engaged with each other.

In the illustrated embodiment, the front-side edge 12 of the upper casing member 1 against which the upper lid 5 is abutted and the rear surface portion 51 of the rear end 50 of the upper lid 5 are formed with respective inclined surfaces adapted to be joined to each other when the lid structure is in a closed state. The recessed groove 13 described above is arranged on the inclined surface of the upper casing member 1 so as to extend in parallel to the front-side edge 12 and formed to have a length substantially equal to a width of the opening 11 of the upper casing member 1. Also, the projection 52 which is provided on the rear surface portion 51 of the rear end 50 of the upper lid 5 so as to be engaged with the recessed groove 13 of the upper casing member 1 is formed to have a length substantially equal to the width of the opening 11 of the upper casing member 1. Such construction of the upper casing member 1 and upper lid 5 prevents the rear end 50 of the upper lid 5 from getting under the front side-edge 12 of the upper casing member 1. This results in smooth pivotal movement of the lid structure being ensured.

In the illustrated embodiment, as described above, the recessed groove 13 of the front-side edge 12 of the upper casing member 1 and the projection 52 of the rear surface portion 51 of the rear end 50 of the upper lid 5 are each formed to have a length substantially equal to the width of the opening 11 of the upper casing member 1. Alternatively, a plurality of such recessed grooves 13 and a plurality of such projections 52 may each be arranged along the front-side edge 12 in a manner to be spaced from each other at predetermined intervals over a whole length of the front-side edge 12.

In the illustrated embodiment, the recessed groove 13 is arranged at the front-side edge 12 of the upper casing member 1 and the projection 52 is arranged on the rear surface portion 51 of the rear end 50 of the upper lid 5. Alternatively, the illustrated embodiment may be so constructed that the recessed groove 13 is arranged at the rear surface portion 51 of the rear end 50 of the upper lid 5 and the projection 52 is arranged on the front-side edge 12 of the upper casing member 1.

In addition, the upper lid 5 is provided on a front side thereof with an additional projection 53 and the front lid 3 is provided on an upper end thereof with a projection 31 in a manner to be opposite to the additional projection 53 of the front lid 5. Such arrangement of the projections 53 and 31, in addition to the above-described fitting of the projection 52 on the rear surface portion 51 of the rear end 50 of the upper lid 5 into the recessed groove 13 of the upper casing member 1, more effectively prevents deformation of the front lid 3 due to external force rearwardly applied to the front lid 3 when the lid structure is in a closed state, because the projection 31 of the front lid 3 and the additional projection 53 of the upper lid 5 are abutted against each other. This positively prevents damage to the tape due to deformation of the lid structure.

During non-use of the tape cassette wherein the lid structure is in a closed state, as shown in Figs. 4A and 4B, the recessed groove 13 formed at the front-side edge 12 of the upper casing member 1 and the projection 52 of the rear surface portion 51 of the rear end 50 of the upper lid 5 are engaged with each other, to thereby prevents the upper lid 5 from getting under the front-side edge 12 due to downward application of external force F to the upper lid 5, resulting in safe handling of the tape cassette being ensured.

The tape cassette of the illustrated embodiment also includes a reel brake member 8 for preventing rotation of the tape reels 6 having the tape 7 wound thereon during non-use of the tape cassette. For this purpose, the reel brake member 8 is provided thereon with arms having respective brake hooks or pawls 8₁ and arranged so as to slide back and forth, to thereby permit each of the pawls 8₁ to be selectively engaged with teeth or indentations formed on an outer periphery of a lower flange of a corresponding one of the tape reels 6. Also, the reel brake member 8 and casing are provided with a regulation mechanism for regulating movement of the reel brake member 8 in a direction in which a braking action of the reel brake member 8 is released. Further, the tape cassette of the illustrated embodiment includes a lid lock member 9 for preventing the lid structure from being opened during non-use of the tape cassette.

In the illustrated embodiment, the front lid 3, rear lid 4 and upper lid 5 which cooperate with each other to constitute the lid structure so as to be opened and closed are supported on the upper casing member 1 while being pivotally joined to each other through hinges 30 and 40, resulting in a portion of the tape 7 positioned outside the casing being protected during non-use of the tape cassette.

Further, the reel brake member 8 may be so constructed that the arms on which the brake pawls 8₁ are provided are outwardly expanded also when the reel brake member 8 is rearwardly moved to use the tape cassette, resulting in ensuring that the reel brake member 8 is constantly engaged with the tape reels 6 to prevent rotation thereof. Also, the reel brake member 8 may be so constructed that the brake pawls 8₁ are rapidly inwardly moved in respective radial directions of the tape reels 6 when the reel brake member 8 is further rearwardly moved to approach a position in proximity to the brake release position. This results in ensuring reliable brake operation while preventing loosening of the tape 7.

In the drawings, reference numeral 14 designates springs for pressedly holding the tape reels 6. Reference numeral 22 designates a plug, 23 an MIC detection section, 24 an optical cover, and 25 screws for connection.

As can be seen from the foregoing, in the tape cassette of the present invention, the upper casing member is formed with the front opening and provided with the front-side edge in a manner to be positioned at the opening. Also, the upper lid is provided at the rear end thereof with the rear surface portion, which is adapted to be abutted against the front-side edge of the upper casing member. Further, one of the front-side edge of the upper casing member and the rear surface portion of the upper lid is provided with the recessed groove and the other thereof is provided with the projection in a manner to be opposite to each other along the opening of the upper casing and thus engageable with each other, respectively. Such construction effectively eliminates damage to the tape due to inward deformation of the upper lid and front lid of the lid structure of the tape cassette. Also, such construction ensures smooth pivotal movement of the lid structure and safe handling of the tape cassette. Further, such construction enhances reliability in operation and handling of the tape cassette, facilitates assembling thereof, and increases efficiency in manufacturing thereof.

While a preferred embodiment of the invention has been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A tape cassette comprising:
a casing formed by joining an upper casing member (1) and a lower casing member (2) to each other; so that
a pair of tape reels (6) is rotatably receivable in said casing with
a tape (7) wound on said tape reels (6) and arranged so as to reversibly travel from one of said tape reels (6) along a front side of said casing to the other of said tape reels (6) while stretchedly extending between said tape reels (6); and
a lid structure including a front lid (3) for selectively covering a front surface of a portion of such tape (7) positioned on said front side of said casing, an upper lid (5) for selectively covering an upper end of said portion of such tape (7) and a rear lid (4) for selectively covering a rear surface of said portion of such tape (7) which are operated in association with each other so as to be opened and closed, characterized in that:
said upper casing member (1) is formed with a front opening (11) and provided with a front-side edge (12) in a manner to be positioned at said opening (11);
said upper lid (5) is provided at a rear end (50) thereof with a rear surface portion (51), which is adapted to be abutted against said front-side edge (12) of said upper casing member (1); and
one of said front-side edge (12) of said upper casing member (1) and said rear surface portion (51) of said upper lid (5) is provided with a recessed groove (13) and the other thereof is provided with a projection (52) in a manner to be opposite to each other along said opening (11) of said upper casing member (1) and thus engageable with each other, respectively.

2. A tape cassette as defined in claim 1, wherein said recessed groove (13) is disposed on said front-side edge (12) of said upper casing member (1) and said projection (52) is disposed on said rear surface portion (51) of said upper lid (5).

3. A tape cassette as defined in claim 1 or 2, wherein said recessed groove (13) and said projection (52) are each formed to have a length substantially equal to a width of said opening (11) of said upper casing member (1).

4. A tape cassette as defined in claim 1, 2 or 3, wherein said front-side edge (12) of said upper casing member (1) and said rear surface portion (51) of said upper lid (5) are formed with respective inclined surfaces adapted to be joined to each other when said lid structure is in a closed state; and
each of said recessed groove (13) and said projection (52) is disposed on a corresponding one of said inclined surfaces so as to extend in parallel to said front-side edge (12) of said upper casing member (1).

5. A tape cassette as defined in any one of claims 1 to 4, wherein said upper lid (5) is provided on a front side thereof with a second projection (53) and said front lid (3) is provided with a third projection (31) in a manner to be opposite to said second projection (53) of said upper lid (5).
